# EUROPEAN PATENT APPLICATION

(11) **EP 3 486 066 A1**
(43) Date of publication of application: **22.05.2019**
(21) Application number: 18206791.8
(22) Date of filing: 16.11.2018
(51) Int. Cl.: B29C 45/72, B29C 71/02, B29C 45/00

(54) **PRODUCTION METHOD FOR RESIN MOLDING**

(30) Priority: 20.11.2017 JP 2017222838; 17.07.2018 JP 2018134092
(71) Applicant: JTEKT CORPORATION, Osaka 542-8502 (JP)
(72) Inventor: BABA, Toshiyuki, Osaka-shi, Osaka 542-8502 (JP)
(74) Representative: Winter, Brandl, Fürniss, Hübner, Röss, Kaiser, Polte - Partnerschaft mbB

(57) **Abstract**

A production method for a resin molding includes: preparing fiber-reinforced resin by continuously feeding a long roving containing a reinforcing fiber, with its length unchanged, into base resin that has been heated to be plasticized; forming a resin molding using the fiber-reinforced resin; and heating the formed resin molding in a non-oxidizing atmosphere.

## Description

### BACKGROUND OF THE INVENTION

### 1. Field of the Invention

The present invention relates to a production method for a resin molding made of fiber-reinforced resin.

### 2. Description of the Related Art

As structural components of an automobile, for example, a resin molding is often used for the purposes of weight reduction, improved quietness, and the like of the automobile. Components requiring higher strength and stiffness in particular are commonly formed with a resin molding made of fiber-reinforced resin that contains reinforcing fibers such as glass fibers, carbon fibers, or aramid fibers in base resin. Examples of these components include a gear, a roller component, a cage of a bearing, a sensor housing of an electric power steering system, and a housing of an electric oil pump.

As such fiber-reinforced resin, it is common to use a short-fiber compound obtained by mixing short reinforcing fibers in base resin and kneading this mixture with kneading discs of a twin-screw kneader, for example, at high temperature under high pressure. However, due to demands for downsizing and higher power of automotive equipment in recent years, still higher strength, higher stiffness, and further improvement in wear resistance and fatigue resistance, for example, have been required for these various types of components.

It is known that, when a resin molding made of fiber-reinforced resin is used, increasing the fiber lengths of reinforcing fibers contained in the resin molding is effective in order to satisfy these requirements. Thus, in order to increase the fiber lengths of reinforcing fibers, production methods for such a resin molding are being studied in various ways. For example, in Japanese Patent Application Publication No. 2010-000654 (JP 2010-000654 A), instead of short reinforcing fibers, a long roving obtained by sizing reinforcing fibers with a sizing agent is used. Increasing the fiber lengths of the reinforcing fibers contained in the resin molding in this manner has been studied.

Specifically, base resin that is raw material of the resin molding is heated to be plasticized while being conveyed in one direction in a plasticizing cylinder of an extruder. At the same time, a long roving is continuously fed, with its length unchanged, into the base resin being conveyed in the plasticizing cylinder through a feed port provided in a midpoint of the plasticizing cylinder, whereby the roving and the base resin are combined together. The resultant resin is continuously extruded from a tip of the plasticizing cylinder, and thus a long fiber-reinforced strand (fiber-reinforced resin) is prepared.

Subsequently, the prepared fiber-reinforced strand is pelletized by a strand cutter (pelletizer), whereby pellets containing reinforcing fibers are made. The reinforcing fibers each have a length that is substantially the same as the entire length of the corresponding pellet. Subsequently, by using the pellets thus made, a resin molding is formed by injection molding, for example. Consequently, although some fibers may be cut by kneading in injection molding to become somewhat shorter, the fiber lengths of the reinforcing fibers contained in the resin molding can be made longer than fiber lengths when a short-fiber compound is used.

Japanese Patent Application Publication No. 2014-166712 (JP 2014-166712 A) describes a method in which fiber-reinforced resin prepared by feeding a long roving, with its length unchanged, into a plasticizing cylinder of an injection molding machine is directly charged into a mold internal space of a mold connected to a tip of the plasticizing cylinder to form a resin molding. Specifically, base resin is heated to be plasticized while being conveyed in one direction by rotation of a screw, for example, in the plasticizing cylinder of the injection molding machine. At the same time, the long roving is continuously fed, with its length unchanged, into the base resin being conveyed in the plasticizing cylinder through a feed port provided in a midpoint of the plasticizing cylinder, whereby fiber-reinforced resin is prepared.

Subsequently, the prepared fiber-reinforced resin is directly charged into the mold internal space of the mold connected to the tip of the plasticizing cylinder, whereby a resin molding is produced. Consequently, although some fibers may be cut by kneading in injection molding to become somewhat shorter similarly to the case described above, the fiber lengths of the reinforcing fibers contained in the resin molding can be made longer than fiber lengths when a short-fiber compound is used.

In a resin molding made of fiber-reinforced resin, it is also important that the molecular weight of base resin forming the resin molding is higher in addition to the property that the fiber lengths of reinforcing fibers contained in the resin molding are longer as described above. By satisfying both of these two properties, a resin molding having still higher strength and higher stiffness and also excellent in wear resistance and fatigue resistance, for example, can be obtained. However, by the production methods described in JP 2010-000654 A and JP 2014-166712 A, it is difficult to satisfy both requirements of increasing the fiber lengths of reinforcing fibers and increasing the molecular weight of base resin.

For example, if a base resin having a higher molecular weight (≈ having a higher viscosity) is selected and used in advance in order to produce a resin molding, stress applied to reinforcing fibers increases when the base resin and the reinforcing fibers are kneaded in a plasticizing cylinder of an extruder or an injection molding machine. This causes the reinforcing fibers to be cut, and thus the fiber lengths tend to become shorter. This also causes dispersibility of the reinforcing fibers to decrease, and thus a situation may occur in which the reinforcing fibers cannot be uniformly dispersed in the base resin. When the fiber lengths of the reinforcing fibers become shorter or the dispersibility thereof decreases, strength or stiffness of the resin molding decreases, and wear resistance may rather decrease.

When the temperature of the plasticizing cylinder is increased, the viscosity of the base resin can be reduced, and the reinforcing fibers can be prevented from being cut to a certain extent even if the base resin has a higher molecular weight. However, when the temperature of the plasticizing cylinder is increased, consumption energy required to produce a resin molding increases, and production cost for the resin molding accordingly increases. Furthermore, the base resin thermally decomposes and the molecular weight thereof accordingly decreases during kneading, which may cause the wear resistance and the fatigue resistance of the resin molding to decrease.

In contrast, if a base resin having a lower molecular weight (≈ having a lower viscosity) is selected and used, the wear resistance and the fatigue resistance of the resin molding tend to decrease. Particularly when the reinforcing fibers are glass fibers, this tendency is greater. By the production methods described in JP 2010-000654 A and JP 2014-166712 A, for example, a situation may occur in which the base resin and the reinforcing fibers cannot be caused to strongly adhere to each other.

Specifically, in preparation of a conventional short-fiber compound, base resin and short reinforcing fibers are sufficiently kneaded with kneading discs of a twin-screw kneader, for example, at high temperature under high pressure as described above. Furthermore, in injection molding using the short-fiber compound, the short-fiber compound is kneaded and heated along the entire length of a plasticizing cylinder of an injection molding machine. In other words, to the short-fiber compound, sufficient pressure and heat quantity are applied during a period from the preparation to the molding.

Thus, by the pressure and the heat quantity, the base resin and the reinforcing fibers can be caused to strongly adhere to each other. By contrast, in the production methods of JP 2010-000654 A and JP 2014-166712 A, base resin and reinforcing fibers can be kneaded and heated only during a short period of time when passing through inside a plasticizing cylinder of an extruder or an injection molding machine, and thus pressure and heat quantity for kneading tend to be insufficient.

In the production method of JP 2014-166712 A in particular, immediately after a roving is fed from the feed port provided in a midpoint of the plasticizing cylinder of the injection molding machine, the resulting mixture is charged into the mold to produce a resin molding, and thus pressure and heat quantity for kneading are insufficient. Consequently, the reinforcing fibers can be suppressed from being cut during kneading, but a situation may occur in which the base resin and the reinforcing fibers cannot be caused to strongly adhere to each other.

### SUMMARY OF THE INVENTION

An object of the present invention is to provide a method for producing a resin molding that contains reinforcing fibers having longer fiber lengths and base resin having a higher molecular weight, with the base resin and the reinforcing fibers strongly adhering to each other, and that has high strength and high stiffness and also is excellent in wear resistance and fatigue resistance, for example, compared to the current one.

An aspect of the present invention provides a production method for a resin molding made of fiber-reinforced resin containing base resin and a reinforcing fiber. The production method includes: a fiber-reinforced resin preparation step of preparing the fiber-reinforced resin by continuously feeding a long roving containing the reinforcing fiber, with its length unchanged, into the base resin that has been heated to be plasticized; a resin molding formation step of forming the resin molding using the fiber-reinforced resin prepared; and a resin molding heating step of heating, in a non-oxidizing atmosphere, the resin molding formed.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1A is a sectional view, in one example of an embodiment of a production method for a resin molding of the present invention, illustrating an outline of one example of an apparatus used for continuously performing a step of preparing fiber-reinforced resin and a step of forming the resin molding;
FIG. 1B is a diagram illustrating an outline of apparatus used in a step of heating the formed resin molding in a non-oxidizing atmosphere in the production method of the example;
FIG. 2 is a sectional view, in another example of the embodiment of the production method for a resin molding of the present invention, illustrating an outline of one example of the apparatus used for performing the step of preparing a fiber-reinforced resin and the step of forming a resin molding;
FIG. 3 is a graph illustrating a relation between the number-average fiber length of reinforcing fibers and the number-average molecular weight of a base resin in a resin molding produced in each of Examples of the present invention and Comparative Examples;
FIG. 4 is a graph illustrating results of measuring tensile strengths of the resin moldings produced in Examples of the present invention and Comparative Examples; and
FIG. 5 is a graph illustrating results of measuring the interfacial shear strength between the base resin and the reinforcing fibers in the resin molding produced in each of Examples of the present invention and Comparative Examples by a push-out test using a nanoindenter.

### DETAILED DESCRIPTION OF EMBODIMENTS

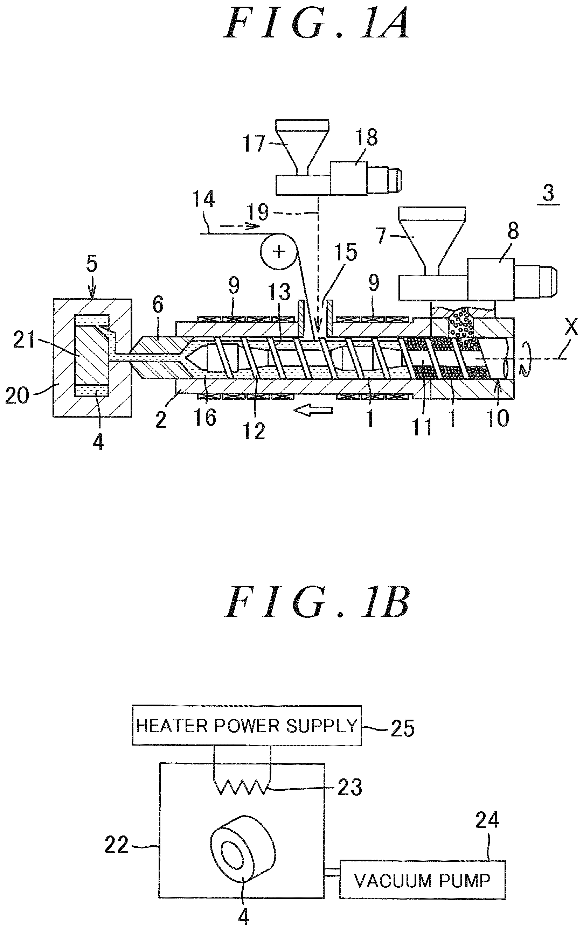

FIG. 1A is a sectional view, in one example of an embodiment of a production method for a resin molding 4 of the present invention, illustrating an outline of one example of an apparatus used for continuously performing a step of preparing fiber-reinforced resin 16 and a step of forming the resin molding 4. As depicted in FIG. 1A, the apparatus includes an injection molding machine 3 and a mold 5. The injection molding machine 3 includes a plasticizing cylinder 2 that heats and plasticizes base resin 1 while conveying the base resin 1 in a conveyance direction indicated by a hollow block arrow in FIG. 1A. The shape of the mold 5 corresponds to that of the resin molding 4 to be produced. The plasticizing cylinder 2 has a cylindrical shape.

The mold 5 is connected to a tip of the plasticizing cylinder 2 on its front side (left side in FIG. 1A) in the conveyance direction with a nozzle 6 interposed therebetween. The nozzle 6 forms the tip of the plasticizing cylinder 2, and is connected to a sprue of the mold 5 for injection molding as depicted in FIG. 1A. To the plasticizing cylinder 2 on its rear side in the conveyance direction, a hopper 7 that accommodates pelletized base resin 1, for example, is connected with a feeding device 8 interposed therebetween. The feeding device 8 functions to feed the base resin 1 accommodated in the hopper 7 to the plasticizing cylinder 2 at a predetermined feed rate, for example.

On an outer periphery of the plasticizing cylinder 2, a plurality of heaters 9 configured to heat and plasticize the base resin 1 conveyed in the plasticizing cylinder 2 are provided along the conveyance direction of the base resin 1 so as to surround the outer periphery of the plasticizing cylinder 2. The heaters 9 may control their temperatures in a collective manner, or may control the temperatures individually. In the plasticizing cylinder 2, a screw 10 configured to convey the base resin 1 in the conveyance direction while kneading the base resin in the plasticizing cylinder 2 is provided. The screw 10 includes a rotating shaft 11 extending along the substantially entire length of the plasticizing cylinder 2 and a helical flight 12 protruding outward from an outer peripheral surface of the rotating shaft 11. The rotating shaft 11 and the flight 12 are integrally formed, for example.

The rotating shaft 11 is disposed in the plasticizing cylinder 2 with its central axis aligned with the axis X of the plasticizing cylinder 2 so as to be rotatable about the axis X. The diameter of the rotating shaft 11 is smaller than that of an inner peripheral surface of the plasticizing cylinder 2 along its substantially entire length in the conveyance direction of the base resin 1. The shape of a radially outer edge of the flight 12 when projected onto a plane orthogonal to the axis X is a circle centered around the axis X, and this circular shape of the flight 12 is arranged concentrically with the rotating shaft 11.

The outer diameter of the circular shape of the flight 12 is slightly smaller than the inner diameter of the inner peripheral surface of the plasticizing cylinder 2. Thus, in the layout in FIG. 1A in which the central axis of the rotating shaft 11 is aligned with the axis X of the plasticizing cylinder 2, the radial outer edge of the flight 12 faces the inner peripheral surface of the plasticizing cylinder 2 along its entire periphery with a predetermined clearance therebetween. On an outer peripheral surface of the screw 10, a helical recessed groove 13 for accommodating and conveying the base resin 1 between this recessed groove and the inner peripheral surface of the plasticizing cylinder 2 is formed between the outer peripheral surface of the rotating shaft 11 and the flight 12.

The base resin 1 is fed from the hopper 7 into the recessed groove 13 by the feeding device 8. The screw 10 is rotated by a rotating mechanism (not depicted) in one direction indicated by a continuous-line arrow in FIG. 1A. With this configuration, when the screw 10 is rotated, the base resin 1 fed from the hopper 7 into the recessed groove 13 is conveyed in the conveyance direction indicated by the hollow block arrow while receiving pressure from the flight 12 and being kneaded. At this time, the base resin 1 is heated by heat from the heaters 9 to be gradually plasticized.

In a midpoint of the plasticizing cylinder 2 in the conveyance direction of the base resin 1, a feed port 15 is provided as a feeding portion (side feeder) communicating between inside and outside of the plasticizing cylinder and configured to continuously feed a long roving 14 into the plasticizing cylinder 2. The roving 14 continuously fed through the feed port 15 into the base resin 1 that is being conveyed in the plasticizing cylinder 2 receives pressure from the flight 12 when the screw 10 is rotated, and thus is kneaded with the base resin 1. Thus, in the plasticizing cylinder 2 between the feed port 15 and the nozzle 6, the fiber-reinforced resin 16 that is raw material of a resin molding 4 is prepared.

The feed port 15 serves also as a feed port through which a reaction aid 19 having functions of assisting the base resin 1 in highly polymerizing and assisting the base resin 1 and reinforcing fibers in adhering to each other is fed into the base resin 1 in the plasticizing cylinder 2. To the feed port 15, a hopper 17 that accommodates the reaction aid 19 is connected with a feeding device 18 interposed therebetween. The feeding device 18 functions to feed the reaction aid 19 accommodated in the hopper 17 into the plasticizing cylinder 2 at a predetermined feed rate, for example, as indicated by the arrow of a long dashed double-short dashed line in FIG. 1A.

The feed port 15 also serves as a vent port for removing gas, moisture, and the like generated when the base resin 1 is heated to be plasticized. Herein, it is important that what is called vent-up that is a phenomenon in which the base resin 1 being conveyed in the plasticizing cylinder 2 leaks from the feed port 15 must be prevented from occurring. For this purpose, any one or two or more of the following methods are preferably used.
- The outer diameter of the rotating shaft 11 or the pitch of the flight 12, for example, of the screw 10 is set such that the conveyance speed of the base resin 1 is faster on the downstream side of the feed port 15 than on the upstream side and/or such that the conveyance amount of the base resin 1 is larger on the downstream side of the feed port 15 than on the upstream side.
- Heating temperatures by the heaters 9 are set at temperatures different between the upstream side and the downstream side of the feed port 15.
- The feed rate of the base resin 1 from the hopper 7 is controlled by the feeding device 8.
- Another conventionally known method for preventing vent-up from occurring is used.

In the present invention, it is also important that reinforcing fibers in the roving 14 fed from the feed port 15 are contained in the resin molding 4 with their longest possible fiber lengths being maintained. For this purpose, for example, any one or two or more of the following methods are preferably used.
- The clearance between the inner peripheral surface of the plasticizing cylinder 2 and the radial outer edge of the flight 12 is adjusted.
- The nozzle diameter of the nozzle 6 and/or the runner diameter of the mold 5, for example, is made larger than normal one.
- Another conventionally known method for increasing the fiber lengths of reinforcing fibers contained in the resin molding 4 is used.

By using these methods in addition to using the apparatus depicted in FIG. 1A to continuously perform the step of preparing the fiber-reinforced resin 16 and the step of forming a resin molding 4, the fiber lengths of reinforcing fibers contained in the resin molding 4 can be increased to be approximately one millimeter or longer, for example. In the example of FIG. 1A, the mold 5 includes an outer mold (cavity) 20, the shape of which corresponds to the external appearance shape of the resin molding 4 and an inner mold (core) 21, the shape of which corresponds to the internal shape of the resin molding 4. However, depending on the shape of a resin molding 4 to be produced, the shape and the structure of the mold 5 may be optionally determined.

The fiber-reinforced resin 16 plasticized in the plasticizing cylinder 2 is injected through the nozzle 6 into the mold internal space between the cavity 20 and the core 21 of the mold 5, and is charged therein. Thus, a resin molding 4, the shape of which corresponds to that of the mold internal space, is formed. To continuously perform the step of preparing fiber-reinforced resin and the step of forming a resin molding in the production method of this example using the apparatus of the example of FIG. 1A including the injection molding machine 3 and the mold 5, base resin 1 is fed into the hopper 7 first. A long continuous roving 14 is also prepared. Into the hopper 17, the reaction aid 19 is fed if needed.

As the base resin 1, various types of resin that can form the fiber-reinforced resin 16 as material for forming a resin molding 4 can be used. Examples of the base resin 1 particularly for forming a resin molding 4 requiring strength, stiffness, and wear resistance, for example, described above, include polyamide (PA) and poly(phenylene sulfide) (PPS). Specific examples of the polyamide include aliphatic polyamides such as PA6, PA66, PA46, PA12, PA612, PA610, PA11, and PA410 and aromatic polyamides such as PA6T, PA9T, PA10T, and PAMXD6. The base resin 1 may be fed in a pelletized form, for example, in the same manner as in conventional methods.

The polyamide is highly polymerized by heating the resin molding in a non-oxidizing atmosphere, as described above, for reaction of a carboxy group (-COOH) and an amino group (-NH2) remaining at ends thereof. Furthermore, this heating causes the carboxy group and the amino group to react with reinforcing fibers, whereby the base resin and the reinforcing fiber are caused to strongly adhere to each other. Examples of the reinforcing fibers forming the roving 14 include glass fibers, carbon fibers, and aramid fibers. The roving 14 is produced by sizing these reinforcing fibers with a sizing agent in the same manner as in conventional methods.

Specifically, the roving 14 can be produced by, for example, applying a liquid sizing agent to reinforcing fibers with an application roller or the like, drying these fibers at high temperature thereby sizing them to form a strand, pulling a predetermined number of strands thus formed with their ends aligned, and winding the resulting strands. Examples of the reaction aid 19 include, depending on the type of a base resin to be used, various compounds having a function of assisting the base resin in highly polymerizing and a function of assisting the base resin and reinforcing fibers in adhering to each other.

For example, when the base resin 1 is polyamide described above, examples of the reaction aid 19 include carbodiimide. With the effect of a carbodiimide group (-N=C=N-) in molecule, the carbodiimide promotes the reaction of a carboxy group and an amino group at ends of polyamide, and causes the carboxy group and the amino group to react with reinforcing fibers. The carbodiimide itself also reacts with the carboxy group and the amino group. Thus, by using carbodiimide, polyamide can be highly polymerized, and adhesion between polyamide and reinforcing fibers can also be enhanced.

As the carbodiimide, any compound having a carbodiimide group in its molecule may be used, which is not limited to a particular type, and monocarbodiimide having one carbodiimide group may be used, or polycarbodiimide having a plurality of carbodiimide groups may be used. Various types of carbodiimide such as aliphatic carbodiimide, aromatic carbodiimide, and modified carbodiimide may also be used.

The proportion of carbodiimide to be compounded is not limited to a particular value, but is preferably 0.5% by mass or higher in the total quantity of raw material to be used for preparing the fiber-reinforced resin 16, and is preferably 4% by mass or lower therein.

The carbodiimide may be fed singly, or may be fed as a masterbatch dry-blended with polyamide.

In the present invention, the reaction aid 19 such as carbodiimide does not have to be fed. Even in this case, according to the present invention, by heating the formed resin molding 4 in a non-oxidizing atmosphere, the base resin 1 forming the resin molding 4 can be highly polymerized. By this heating, adhesion between the base resin 1 and reinforcing fibers can also be enhanced. Subsequently, in the production method of this example, for example, by activating the feeding device 8 while controlling the temperatures of the heaters 9 individually, feeding of base resin 1 accommodated in the hopper 7 into the plasticizing cylinder 2 at a predetermined feed rate is started. Accordingly, as described above, when the screw 10 is rotated, the base resin 1 thus fed is conveyed in the conveyance direction indicated by the hollow block arrow while receiving pressure from the flight 12 and being kneaded, and is also heated by heat from the heaters 9 to be gradually plasticized.

In this state, into the base resin 1 that is being conveyed in the plasticizing cylinder 2, the roving 14 is continuously fed through the feed port 15. Accordingly, the fed roving 14 receives pressure from the flight 12 when the screw 10 is rotated, and thus is kneaded with the base resin 1, and is also heated by heat from the heaters 9, whereby the fiber-reinforced resin 16 is prepared. At this time, if needed, the reaction aid 19 accommodated in the hopper 17 may be fed at a predetermined feed rate through the feed port 15 into the base resin 1 that is being conveyed in the plasticizing cylinder 2.

The fiber-reinforced resin 16 thus prepared is injected through the nozzle 6 into the mold internal space between the cavity 20 and the core 21 of the mold 5, and is charged therein as described above. Thus, the resin molding 4, the shape of which corresponds to that of the mold internal space, is formed. FIG. 1B is a diagram illustrating an outline of an apparatus used at heating the formed resin molding 4 in a non-oxidizing atmosphere in the production method of the above-described example.

As depicted in FIG. 1B, this apparatus includes a chamber 22, a heater 23, and a vacuum pump 24. The chamber 22 accommodates the resin molding 4. The heater 23 heats the resin molding 4 accommodated in the chamber 22. The vacuum pump 24 produces a reduced-pressure atmosphere (non-oxidizing atmosphere) in the chamber 22 in which the pressure is reduced to a predetermined degree of vacuum. To the heater 23, a heater power supply 25 configured to apply power to the heater 23 to heat the resin molding 4 is connected.

To perform the step of heating a resin molding 4 formed at the previous step in the production method of this example using this apparatus, the resin molding 4 is accommodated in the chamber 22 first. Subsequently, the chamber 22 is closed, and the vacuum pump 24 is activated to reduce the pressure inside the chamber 22 to the predetermined degree of vacuum, whereby a reduced-pressure atmosphere that is a non-oxidizing atmosphere is produced therein. Subsequently, power is applied to the heater 23 by the heater power supply 25 to heat the resin molding 4 in the chamber 22.

Consequently, the base resin 1 forming the resin molding 4 is highly polymerized according to the mechanism described above. Furthermore, the base resin 1 and reinforcing fibers are caused to strongly adhere to each other. The heating temperature is preferably set at a temperature equal to or higher than a temperature at which reaction of a functional group at an end of the base resin 1 proceeds and lower than a melting point of the base resin 1. If the heating temperature is lower than this range, the reaction of a functional group at an end of the base resin 1 does not proceed quickly. Thus, the base resin 1 may fail to be highly polymerized, or the base resin 1 and the reinforcing fibers may fail to strongly adhere to each other. If the heating temperature exceeds this range, thermal deformation may occur during heating, thereby deteriorating the dimensional accuracy of the resin molding 4.

In contrast, by setting the heating temperature within the range, thermal deformation during heating can be reduced, and the base resin 1 forming the resin molding 4 can be highly polymerized with the dimensional accuracy of the resin molding 4 maintained. In addition, the base resin 1 and the reinforcing fibers can be caused to strongly adhere to each other. For example, when the base resin is PA66, the heating temperature is preferably 180°C or higher, more preferably 200°C or higher, and is preferably 250°C or lower, more preferably 240°C or lower.

By reducing the partial pressure of oxygen in the chamber 22, the degree of vacuum in the chamber 22 during heating can be set within an appropriate range in which oxidative decomposition of the base resin 1 does not occur when the resin molding 4 is heated within the above-described temperature range. The specific range of the pressure in the chamber indicating the degree of vacuum is preferably, but is not limited to, for example, 10 Pa or lower, and more preferably 5 Pa or lower. However, when the set degree of vacuum is excessively high (the pressure is too low), a long period of time is needed until this degree of vacuum is reached. This may reduce productivity of the resin molding 4, thereby increasing production cost.

As described above, the pressure in the chamber 22 only needs to be reduced to an extent in which oxidative decomposition of the base resin 1 does not occur when the resin molding 4 is heated within a predetermined temperature range. Thus, the pressure in the chamber only needs to be 0.1 Pa or higher, or to be 0.5 Pa or higher in particular. Heating time can be set depending on the size and the shape, for example, of the resin molding 4 within an appropriate range in which, for example, the base resin 1 can be highly polymerized sufficiently and adhesion between the base resin 1 and reinforcing fibers can be enhanced sufficiently in the whole of the resin molding 4. The specific range for the heating time is preferably, but is not limited to, one hour or longer, and more preferably three hours or longer.

However, if the heating time is excessively long, the base resin 1 deteriorates and thermally decomposes, which may cause the molecular weight to rather decrease. Furthermore, a situation may occur in which consumption energy required to produce the resin molding 4 increases and production cost for the resin molding 4 accordingly increases. In view of this, the heating time is preferably 15 hours or shorter, and more preferably 12 hours or shorter even within the above-described range.

By heating a resin molding 4 under conditions described above, for example, the base resin 1 forming the resin molding 4 can be highly polymerized satisfactorily. Furthermore, adhesion between the base resin 1 and reinforcing fibers can be sufficiently enhanced. Since the fiber lengths of reinforcing fibers contained in the resin molding 4 can be made as long as possible, as described above, it is possible to produce the resin molding 4 that has higher strength and higher stiffness and higher wear resistance and fatigue resistance, for example, than the current resin molding.

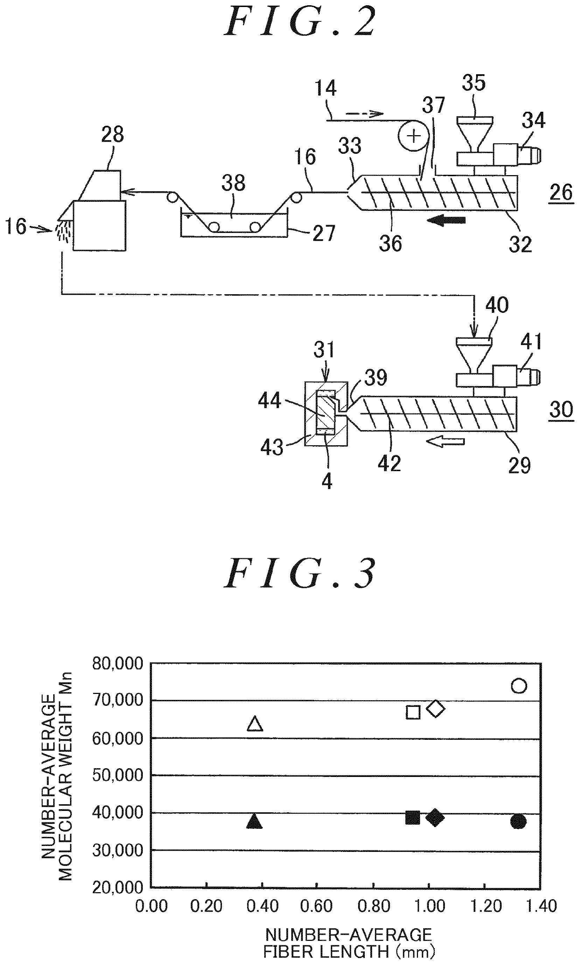

Herein, as a non-oxidizing atmosphere, instead of the reduced-pressure atmosphere, an inert gas atmosphere produced by purging the chamber 22 with inert gas such as nitrogen gas or argon gas can also be used. Alternatively, a reduced-pressure atmosphere with inert gas atmosphere, which is produced by feeding inert gas under reduced pressure, can be used. FIG. 2 is a sectional view, in another example of the embodiment of the production method for a resin molding 4 of the present invention, illustrating an outline of one example of an apparatus used for performing the step of preparing the fiber-reinforced resin 16 and the step of forming a resin molding 4.

As depicted in FIG. 2, this apparatus includes an extruder 26 and a cooling bath 27. The extruder 26 continuously extrudes, in the shape of a long strand, the fiber-reinforced resin 16 containing base resin and reinforcing fibers originating from the long roving 14. The cooling bath 27 continuously cools the long fiber-reinforced resin 16 thus extruded. The apparatus includes a pelletizer 28 that cuts the long fiber-reinforced resin 16 cooled by the cooling bath 27 in a predetermined length to pelletize the fiber-reinforced resin. The apparatus also includes an injection molding machine 30 and a mold 31. The injection molding machine 30 includes a plasticizing cylinder 29 that heats and plasticizes the pelletized fiber-reinforced resin 16 while conveying the fiber-reinforced resin in a conveyance direction indicated by a hollow block arrow in FIG. 2. The shape of the mold 31 corresponds to that of the resin molding 4 to be produced.

The extruder 26 includes a plasticizing cylinder 32 that heats and plasticizes base resin while conveying the base resin in a conveyance direction indicated by a black arrow in FIG. 2. To the plasticizing cylinder 32 on its front side (left side in FIG. 2) in the conveyance direction, a die 33 for continuously extruding fiber-reinforced resin in a predetermined cross-sectional shape is connected. The die 33 forms a tip of the plasticizing cylinder 32. To the plasticizing cylinder 32 on its rear side in the conveyance direction, a hopper 35 that accommodates base resin is connected with a feeding device 34 interposed therebetween. The feeding device 34 functions to feed the base resin accommodated in the hopper 35 to the plasticizing cylinder 32 at a predetermined feed rate, for example.

On an outer periphery of the plasticizing cylinder 32, heaters (not depicted) configured to heat and plasticize the base resin conveyed in the plasticizing cylinder 32 are provided. In the plasticizing cylinder 32, a screw 36 configured to convey the base resin in the conveyance direction while kneading the base resin in the plasticizing cylinder 32 is provided. The plasticizing cylinder 32, the heaters, and the screw 36 can be configured in the same manner as the plasticizing cylinder 2, the heaters 9, and the screw 10 in the previously described example of FIG. 1A, respectively.

The screw 36 is rotated by a rotating mechanism (not depicted) in one direction. With this configuration, when the screw 36 is rotated, the base resin fed from the hopper 35 into the plasticizing cylinder 32 is conveyed in the conveyance direction indicated by the black arrow while receiving pressure and being rotated. At this time, the base resin is heated by heat from the heaters to be gradually plasticized. In a midpoint of the plasticizing cylinder 32 in the conveyance direction of the base resin, a feed port 37 is provided as a feeding portion (side feeder) communicating between inside and outside of the plasticizing cylinder 32 and configured to continuously feed the long roving 14 into the plasticizing cylinder 32.

The roving 14 continuously fed through the feed port 37 into the base resin that is being conveyed in the plasticizing cylinder 32 receives pressure when the screw 36 is rotated, and thus is kneaded with the base resin. Thus, in the plasticizing cylinder 32 between the feed port 37 and the die 33, the fiber-reinforced resin 16 that is raw material of the resin molding 4 is prepared. The feed port 37 serves also as a vent port for removing gas, moisture, and the like generated when the base resin is heated to be plasticized.

In order to prevent vent-up, from the feed port 37, of the base resin that is being conveyed in the plasticizing cylinder 32, and to cause reinforcing fibers in the roving 14 to be contained in the resin molding 4 with their longest possible fiber lengths, various methods described above are preferably used also in this example. The prepared fiber-reinforced resin 16 is continuously extruded in the shape of a long strand through the die 33 connected to the tip of the plasticizing cylinder 32.

The long fiber-reinforced resin 16 thus extruded is immersed into cooling water 38 in the cooling bath 27, and then fed to the pelletizer 28 to be pelletized. Thus, the pelletized fiber-reinforced resin 16 containing reinforcing fibers extending along its substantially entire length is prepared. Subsequently, the pelletized fiber-reinforced resin 16 thus prepared is fed to the injection molding machine 30. The injection molding machine 30 is configured in the same manner as in the previous example of FIG. 1A except having no feed port in a midpoint of the plasticizing cylinder 29. Specifically, to a tip of the plasticizing cylinder 29 on the front side (left side in FIG. 2) in the conveyance direction indicated by the hollow block arrow in FIG. 2, the mold 31 is connected with a nozzle 39 interposed therebetween. The nozzle 39 forms the tip of the plasticizing cylinder 29, and is connected to a sprue of the mold 31 for injection molding.

To the plasticizing cylinder 29 on its rear side in the conveyance direction, a hopper 40 that accommodates the pelletized fiber-reinforced resin 16 is connected with a feeding device 41 interposed therebetween. The feeding device 41 functions to feed the fiber-reinforced resin 16 accommodated in the hopper 40 to the plasticizing cylinder 29 at a predetermined feed rate, for example. On an outer periphery of the plasticizing cylinder 29, heaters (not depicted) configured to heat and plasticize the fiber-reinforced resin 16 conveyed in the plasticizing cylinder 29 are provided. In the plasticizing cylinder 29, a screw 42 configured to convey the fiber-reinforced resin 16 in the conveyance direction while kneading the fiber-reinforced resin in the plasticizing cylinder 29 is provided.

The plasticizing cylinder 29, the heaters, and the screw 42 can be configured in the same manner as the plasticizing cylinder 2, the heaters 9, and the screw 10 in the previously described example of FIG. 1A, respectively. In the same manner as the mold 5 in the example of FIG. 1A, the mold 31 includes a cavity 43 the shape of which corresponds to the external appearance shape of the resin molding 4 and a core 44 the shape of which corresponds to the internal shape of the resin molding 4. However, depending on the shape of the resin molding 4 to be produced, the shape and the structure of the mold 31 may be optionally determined.

The screw 42 is rotated by a rotating mechanism (not depicted) in one direction. With this configuration, when the screw 42 is rotated, the fiber-reinforced resin 16 fed from the hopper 40 into the plasticizing cylinder 29 is conveyed in the conveyance direction indicated by the hollow block arrow while receiving pressure and being rotated. At this time, the fiber-reinforced resin 16 is heated by heat from the heaters to be gradually plasticized. The fiber-reinforced resin 16 plasticized in the plasticizing cylinder 29 is injected through the nozzle 39 into a mold internal space between the cavity 43 and the core 44 of the mold 31, and is charged therein. Thus, a resin molding 4, the shape of which corresponds to that of the mold internal space, is formed.

In the same manner as in the previous example, the formed resin molding 4 is heated in a non-oxidizing atmosphere such as a reduced-pressure atmosphere by the apparatus depicted in FIG. 1B, for example. Consequently, the base resin forming the resin molding 4 is highly polymerized, and the resin molding 4 in which the base resin and reinforcing fibers strongly adhere to each other is produced. Since the fiber lengths of reinforcing fibers contained in the resin molding 4 can be made as long as possible, it is possible to produce the resin molding 4 that has higher strength and higher stiffness and higher wear resistance and fatigue resistance, for example, than the current resin molding.

As the base resin and the reinforcing fibers, any of base resins and reinforcing fibers in various types described in the previous example can be used. As heating conditions (the degree of vacuum, temperature, period of time, etc.) and other conditions, the same conditions as in the previous example can also be used. In the same manner as in the previous example, as a non-oxidizing atmosphere, instead of the reduced-pressure atmosphere, an inert gas atmosphere can be used, or a reduced-pressure atmosphere + inert gas atmosphere produced by feeding inert gas under reduced pressure can be used.

Configurations of the present invention are not limited to those using the apparatuses of the respective examples in FIGS. 1A to 2 described above. For example, in the step of forming a resin molding using prepared fiber-reinforced resin, any of various conventionally known molding methods can be used depending on the shape of the resin molding. Examples of such molding methods include injection molding, press molding, laminate molding, transfer molding, and extrusion molding.

Furthermore, in the step of heating a resin molding, instead of the heaters, various conventionally known heating methods such as hot-air heating and induction heating can be used. In addition, within the scope described in the claims, various design modifications can be made.

The present invention will be further described with reference to Examples and Comparative Examples, but the configuration of the present invention is not limited by these Examples or Comparative Examples. The following describes Example 1. With the apparatuses depicted in FIG. 1A and FIG. 1B, by the production method of the present invention, an ISO multipurpose test specimen type A (thickness: 4 mm, width of narrow portion: 10 mm) specified in International Standardization Organization Standard ISO 3167 was produced as a resin molding 4.

Specifically, the long roving 14 was continuously fed, with its length unchanged, into the base resin 1 being conveyed in the plasticizing cylinder 2 of the injection molding machine 3 to prepare the fiber-reinforced resin 16, and the prepared fiber-reinforced resin was directly charged into the mold internal space of the mold 5 connected to the tip of the plasticizing cylinder 2 to form the resin molding 4. The formed resin molding 4 was then accommodated in the chamber 22, and was heated at 220°C for five hours in the chamber 22 in which the pressure was reduced to a degree of vacuum of 1 Pa or lower, whereby the resin molding 4 was produced.

As the base resin 1, unreinforced PA66 [Leona (registered trademark) 1402S manufactured by Asahi Kasei Corporation] was used. As the roving 14, a roving obtained by sizing high-strength glass fibers (tensile elastic modulus: 81 to 100 GPa) with a sizing agent was used. The proportion of the glass fibers in the total quantity of the glass fibers and the base resin was 30% by mass.

The resin molding 4 that was formed in the same manner as in Example 1 but was not heated under reduced pressure was used as Comparative Example 1. The following describes Example 2. The resin molding 4 having the same shape and the same dimensions was produced in the same manner as in Example 1 except that a roving obtained by sizing ordinary-strength glass fibers (tensile elastic modulus: 65 to 80 GPa) with a sizing agent was used as the roving 14 and the resin molding 4 was heated under conditions at a degree of vacuum of 1 Pa or lower and at a temperature of 220°C for 10 hours. The resin molding 4 that was formed in the same manner as in Example 2 but was not heated under reduced pressure was used as Comparative Example 2.

The following describes Example 3. Pellets containing reinforcing fibers each having a length of about 11 millimeters that is substantially the same as the length of the corresponding pellet were prepared as the fiber-reinforced resin 16. PA66 was used as base resin, ordinary-strength glass fibers (tensile elastic modulus: 65 to 80 GPa) were used as reinforcing fibers, and the proportion of the glass fibers in the total quantity of the glass fibers and the base resin was 30% by mass.

As the pellets, pellets produced by using the extruder 26, the cooling bath 27, and the pelletizer 28 in the apparatus in FIG. 2 were used. Specifically, the long roving 14 was continuously fed, with length unchanged, into the base resin being conveyed in the plasticizing cylinder 32 of the extruder 26 to prepare the fiber-reinforced resin 16, and the prepared fiber-reinforced resin was cooled in the cooling bath 27, and then pelletized with the pelletizer 28.

Subsequently, these pellets were injected and molded by using the injection molding machine 30 and the mold 31 in the apparatus in FIG. 2, whereby the resin molding 4 having the same shape and the same dimensions as in Example 1 was produced. Specifically, the pellets were fed to the injection molding machine 30 and, while being plasticized in the plasticizing cylinder 29 of the injection molding machine 30, were charged into the mold internal space of the mold 31 connected to the tip of the plasticizing cylinder 29 to form the resin molding 4.

The formed resin molding 4 was then accommodated in the chamber 22 of the apparatus in FIG. 1B, and was heated at 220°C for 10 hours in the chamber 22 in which the pressure was reduced to a degree of vacuum of 1 Pa or lower, whereby the resin molding 4 was produced. The resin molding 4 that was formed in the same manner as in Example 3 but was not heated under reduced pressure was used as Comparative Example 3.

The following describes Comparative Example 4. The resin molding 4 was formed in the same manner as in Example 3 except that pellets of a short-fiber compound obtained by mixing short-fiber reinforcing fibers having a fiber length of about 0.3 millimeters in base resin and kneading this mixture at high temperature under high pressure with kneading discs of a twin-screw kneader, for example, were used as fiber-reinforced resin. The formed resin molding 4 was then accommodated in the chamber 22 of the apparatus in FIG. 1B, and was heated at 220°C for 10 hours in the chamber 22 in which the pressure was reduced to a degree of vacuum of 1 Pa or lower, whereby the resin molding 4 was produced.

PA66 was used as base resin, ordinary-strength glass fibers (tensile elastic modulus: 65 to 80 GPa) were used as reinforcing fibers, and the proportion of the glass fibers in the total quantity of the glass fibers and the base resin was 30% by mass. The resin molding 4 that was formed in the same manner as in Comparative Example 4 but was not heated under reduced pressure was used as Comparative Example 5.

The number-average fiber length (mm) of the reinforcing fibers in the resin molding produced in each of Examples and Comparative Examples described above was determined by the following method. Specifically, by using a simultaneous thermogravimetric/differential thermal analyzer (TG-DTA), each resin molding was caused to burn in a nitrogen and oxygen atmosphere, and then glass fibers remaining as residue were selected at random. The lengths of the selected glass fibers were measured, and the number average of the lengths was determined as a number-average fiber length (mm).

The number-average molecular weight Mn of the base resin in the resin molding produced in each of Examples and Comparative Examples was measured by Trifluoroacetic Acid Derivatization Gel Permeation Chromatography method. The method used for this measurement is as follows. Anhydrous trifluoroacetic acid (TFA) was dissolved in an organic solvent to prepare a trifluoroacetic acid solution. PA66 was put in this trifluoroacetic acid solution, whereby amide groups in PA66 were derivatized with trifluoroacetic acid (TFA). The resulting TFA-derivatized PA66 was dissolved in a mobile phase, and was measured with a gel permeation chromatograph (GPC). Separated peaks were detected with a UV spectrometer, and the number-average molecular weight Mn of a base resin was calculated based on a calibration curve of polystyrene serving as a reference material and having a known molecular weight. The relation between the number-average fiber length (mm) of the reinforcing fibers and the number-average molecular weight Mn of the base resin is illustrated in FIG. 3. Symbols in FIG. 3 are defined as follows. Specifically, the resin moldings that were not heated in a non-oxidizing atmosphere are indicated by black solid symbols, and those heated are indicated by the same symbols that are hollow.
◇: Example 1, ◆: Comparative Example 1
□ : Example 2, ■: Comparative Example 2
○: Example 3, ●: Comparative Example 3
Δ: Comparative Example 4, ▲: Comparative Example 5

As depicted in FIG. 3, it was found that, in any resin molding, the base resin forming the resin molding can be highly polymerized by heating the formed resin molding in a non-oxidizing atmosphere. Furthermore, from the results of Examples 1 to 3 in each of which the resin molding formed with the fiber-reinforced resin prepared by continuously feeding a long roving containing reinforcing fibers was heated in a non-oxidizing atmosphere, it was found that a resin molding containing reinforcing fibers having longer fiber lengths and base resin having a higher molecular weight can be produced.

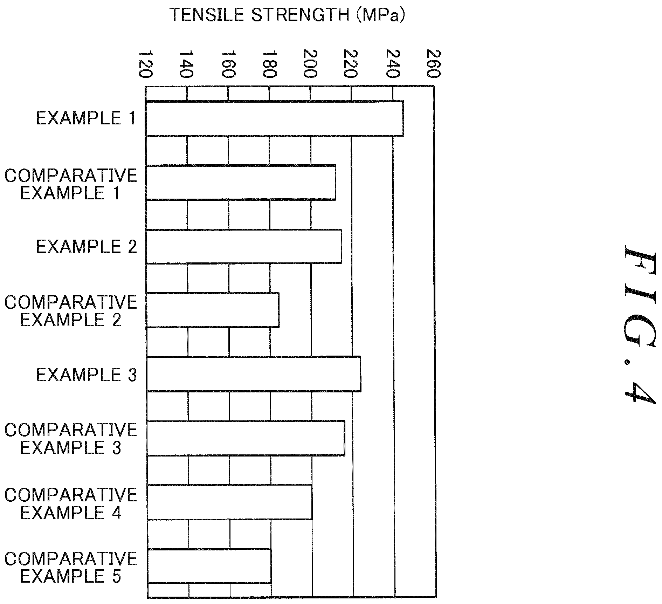

The tensile strength of the resin molding (ISO multipurpose test specimen type A) produced in each of Examples and Comparative Examples was measured according to a measuring method specified in International Standardization Organization Standard ISO 527. Consequently, as depicted in FIG. 4, it was also found that, in any resin molding, the base resin forming the resin molding can be highly polymerized by heating the formed resin molding in a non-oxidizing atmosphere as described above, and also the base resin and the reinforcing fibers can be caused to strongly adhere to each other. Furthermore, from the results of Examples 1 to 3 in each of which the resin molding formed with the fiber-reinforced resin prepared by continuously feeding a long roving containing reinforcing fibers was heated in a non-oxidizing atmosphere, it was found that the tensile strength of a resin molding can be increased more than Comparative Examples 1 to 5 that do not satisfy any of conditions of Examples 1 to 3.

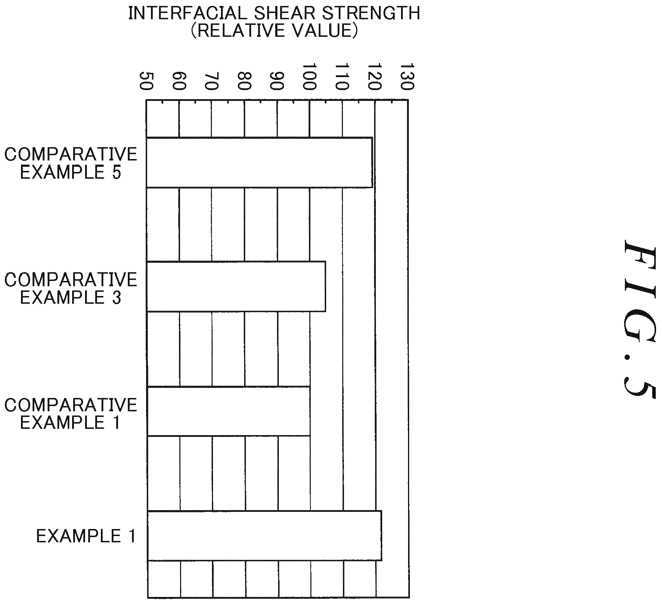

Samples were prepared by slicing the resin moldings produced in Example 1 and Comparative Examples 1,3, and 5 each in a thickness of several tens of micrometers. On each sample thus prepared, a push-out test using a nanoindenter was performed to measure the interfacial shear strengths between the base resin and the reinforcing fibers. Specifically, from each prepared sample, a plurality of reinforcing fibers, the orientation directions of which were parallel to the thickness direction of the sample, were selected. The average of interfacial shear strengths (MPa) measured when load was applied to the selected reinforcing fibers with an indenter of the nanoindenter in the thickness direction of the sample was determined. In FIG. 5, the results are shown in relative value when the result of Comparative Example 1 is defined as 100.

From the results in FIG. 5, it was found that, among Comparative Examples 1, 3, and 5 in which the produced resin moldings were not heated in non-oxidizing atmosphere, the interfacial shear strength between the base resin and the reinforcing fibers decreases in the order of:
- Comparative Example 5 in which pellets of a short-fiber compound were used;
- Comparative Example 3 in which pellets containing reinforcing fibers each extending along the substantially entire length of the corresponding pellet; and
- Comparative Example 1 in which fiber-reinforced resin prepared by feeding a long roving with its length unchanged was directly charged into the mold internal space of the mold.
The state of each sample after the push-out test was observed with a microscope. In Comparative Example 5, no peeling was found in an interface between the base resin and the pushed out reinforcing fiber. However, in each of Comparative Examples 1 and 3, peeling was found in the interface.

The reason for these may be that, as described above, pressure and heat quantity applied for kneading during a period from the preparation to the molding of the fiber-reinforced resin decrease in this order, and adhesion between the base resin and the reinforcing fibers accordingly decreases in this order. In contrast, it was found from the result of Example 1 that, by heating the resin molding of Comparative Example 1 in a non-oxidizing atmosphere, the interfacial shear strength between the base resin and the reinforcing fibers can be increased to be equivalent to or higher than that in Comparative Example 5 using pellets of a short-fiber compound. When the state of each sample after the push-out test was observed with a microscope, peeling in an interface between the base resin and the reinforcing fiber found in Comparative Example 1 was not found in Example 1. From these results, it was found that, by heating the resin molding in a non-oxidizing atmosphere, the base resin and the reinforcing fibers can be caused to react and strongly adhere to each other.

Furthermore, it was found that the tensile strength of the resin molding of Example 1 was increased to be much higher than that in Comparative Example 5 as depicted in FIG. 4 due to the synergistic effect of the fact that the interfacial shear strength between the base resin and the reinforcing fibers was increased to be equivalent to or higher than that in Comparative Example 5 as described above together with the facts that, as depicted in FIG. 3:
- the fiber lengths of the reinforcing fibers were longer than those in Comparative Example 5; and
- the base resin was highly polymerized more than in Comparative Example 5 by heating in a non-oxidizing atmosphere.

## Claims

1. A production method for a resin molding made of fiber-reinforced resin containing base resin and a reinforcing fiber, the production method comprising:
a fiber-reinforced resin preparation step of preparing the fiber-reinforced resin by continuously feeding a long roving containing the reinforcing fiber, with its length unchanged, into the base resin that has been heated to be plasticized;
a resin molding formation step of forming the resin molding using the fiber-reinforced resin prepared; and
a resin molding heating step of heating, in a non-oxidizing atmosphere, the resin molding formed.

2. The production method for a resin molding according to claim 1, wherein heating temperature for the resin molding is set at a temperature equal to or higher than a temperature at which reaction of a functional group at an end of the base resin occurs and lower than a melting point of the base resin.

3. The production method for a resin molding according to claim 1 or 2, wherein the non-oxidizing atmosphere is at least one of a reduced-pressure atmosphere and an inert gas atmosphere.

4. The production method for a resin molding according to any one of claims 1 to 3, wherein, the fiber-reinforced resin preparation step and the resin molding formation step are continuously performed, the fiber-reinforced resin preparation step performed by using an injection molding machine including a plasticizing cylinder that heats and plasticizes the base resin while conveying the base resin in one direction and a feeding portion that continuously feeds the roving into the base resin being conveyed in the plasticizing cylinder and by using a mold connected to a tip of the plasticizing cylinder of the injection molding machine, and the resin molding formation step performed by charging the fiber-reinforced resin into a mold internal space of the mold.

5. The production method for a resin molding according to claim 4, wherein into the base resin being conveyed in the plasticizing cylinder, a reaction aid having a function of assisting a functional group at an end of the base resin in reacting is fed from the feeding portion.

6. The production method for a resin molding according to any one of claims 1 to 3, wherein
the fiber-reinforced resin preparation step is performed by, using an extruder including a plasticizing cylinder that heats and plasticizes the base resin while conveying the base resin in one direction, continuously feeding the roving together with the base resin into the plasticizing cylinder, and
the resin molding formation step is performed by, using an injection molding machine including a plasticizing cylinder that heats and plasticizes the fiber-reinforced resin while conveying the fiber-reinforced resin in one direction and a mold connected to a tip of the plasticizing cylinder of the injection molding machine, charging the fiber-reinforced resin prepared by the extruder into a mold internal space of the mold.

7. The production method for a resin molding according to claim 6, wherein the extruder includes a feeding portion that continuously feeds the roving into the base resin being conveyed in the plasticizing cylinder.

8. The production method for a resin molding according to claim 6 or 7, further comprising pelletizing the fiber-reinforced resin extruded from a tip of the plasticizing cylinder of the extruder and then feeding the fiber-reinforced resin pelletized into the injection molding machine.
